Europäisches Patentamt

European Patent Office

Office européen des brevets

(11) Veröffentlichungsnummer: **0 137 901**
**A2**

## (12) EUROPÄISCHE PATENTANMELDUNG

(21) Anmeldenummer: **84105870.4**

(22) Anmeldetag: **23.05.84**

(51) Int. Cl.⁴: **H 04 M 19/04**

(30) Priorität: **18.10.83 CH 5658/83**

(43) Veröffentlichungstag der Anmeldung: **24.04.85**
**Patentblatt 85/17**

(84) Benannte Vertragsstaaten: **AT CH DE LI NL**

(71) Anmelder: **SIEMENS-ALBIS AKTIENGESELLSCHAFT,
EGA1/Verträge und Patente Postfach, CH-8047 Zürich
(CH)**

(72) Erfinder: **Weisigk, Günther, Lärchenstrasse 32,
CH-8903 Birmensdorf (CH)**

(54) **Schaltungsanordnung für einen Fernsprechapparat.**

㉗ Der Fernsprechapparat weist ein einziges akustisches Hörorgan (H) auf, das sowohl als Hörer (Telefon) als auch als Ruforgan (Wecker) dient. Eine Steuerschaltung (ST) schaltet je nach dem Betriebszustand des Fernsprechapparates das Hörorgan (H) entweder in den Hörstromkreis oder in den Rufstromkreis. Ferner ist ein Signalisierungsweg (SD, S) vorhanden, über den der Steuerschaltung (ST) neben dem Rufsignal verschiedenste andere auf der Anschlußleitung ankommende Signalisierungen zugeführt werden, wo deren Bewertung stattfindet. Die Steuerschaltung (ST) veranlaßt dann die Einleitung der entsprechenden Funktionen im Fernsprechapparat. So wird das Rufsignal in einen Mehrtonruf umgesetzt und über das Hörorgan (H) abgestrahlt.

EP 0 137 901 A2

0137901
Unser Zeichen
83P9813

Zürich

## Schaltungsanordnung für einen Fernsprechapparat

Die vorliegende Erfindung betrifft eine Schaltungsanordnung gemäss dem Oberbegriff des Patentanspruches 1.

Derart aufgebaute Fernsprechapparate sind bekannt. Immer komplexere und verschiedenste Funktionen übernehmende Elektronikschaltungen gelangen in der Fernsprechtechnik zum Einsatz. So sind im Zuge der Ablösung des Nummernschalters durch einen Wähltastensatz integrierte Schaltkreise entwickelt worden, die die eingetasteten Ziffern entweder in Wahlimpulsserien oder in Tonfrequenzsignale umsetzen und die umgesetzten Signale entsprechend den in der betreffenden Fernsprechanlage herrschenden Verhältnissen auf die Anschlussleitung abgeben. Die Speisung dieser Schaltkreise erfolgt in der Regel über eine Stromversorgungsschaltung, die die notwendige Speisespannung aus der auf der Anschlussleitung anliegenden Gleichspannung erzeugt. Neben dem im Hörstromkreis angeordneten Hörorgan (Telefon) weisen bekannte Fernsprechapparate noch ein Ruforgan (Wecker) auf, d.h. für die Wiedergabe der Sprachsignale und der Rufsignale sind zwei verschiedene akustische Wandler vorhanden, was einen nicht unerheblichen Aufwand bedeutet. Die heutige Entwicklung hat zum Ziel, kleinere und noch komfortablere, d.h. mit einer Vielzahl von bekannten und neuen Leistungsmerkmalen ausgestattete Fernsprechapparate zu schaffen, die zudem noch kostengünstig sein sollen, weshalb es unumgänglich ist, den bei bisherigen Apparaten erbrachten Aufwand wo immer möglich zu reduzieren.

Der vorliegenden Erfindung liegt daher die Aufgabe zugrunde, unter Einsatz moderner Bauelemente eine Schaltungsanordnung für einen Fernsprechapparat der eingangs genannten Art zu schaffen, der der erwähnten Zielsetzung gerecht wird. Die Lösung der Aufgabe gelingt erfindungsgemäss durch die im Kennzeichen des Patentanspruchs 1 angegebenen Massnahmen. Vorteilhafte Weiterbildungen sind in weiteren Ansprüchen angegeben.

Ein Vorteil der Erfindung ist im Ersatz des Hörorgans und des Ruforgans durch ein einziges akustisches Organ zu sehen, über das je nach dem Betriebszustand des Fernsprechapparates entweder das Sprachsignal und die Hörtöne oder das Rufsignal abgestrahlt wird. Die Steuerung des akustischen Organs erfolgt durch eine Steuerschaltung, die entsprechend dem jeweiligen Betriebszustand des Fernsprechapparates das Organ entweder in den Hörstromkreis oder in den Rufstromkreis einschaltet. Als Steuerschaltung eignet sich ein entsprechend programmierbarer Mikrocomputer. Sich aus Weiterbildungen der erfindungsgemässen Schaltungsanordnung ergebende weitere Vorteile sind aus der nachfolgenden Beschreibung eines Ausführungsbeispiels ersichtlich.

Die Erfindung wird anhand einer Zeichnung beispielsweise näher erläutert. Diese zeigt Einzelheiten einer konkreten Ausführung der Schaltungsanordnung, wobei vor allem die zum Verständnis der Erfindung wesentlichen Schaltungseinzelheiten des vorgeschlagenen Fernsprechapparates enthalten sind. Der Fernsprechapparat ist in bekannter Weise über einen Verpolungsschutzgleichrichter GR an die Adern a, b der Anschlussleitung angeschlossen. Der positive Ausgang des Gleichrichters GR ist auf eine Begrenzerschaltung BS geführt. Diese sorgt dafür, dass das Potential an ihrem Ausgang unabhängig von der am Eingang anliegenden Spannung einen bestimmten Wert nicht überschreitet. Der Ausgang der Begrenzerschaltung BS (Schaltungspunkt E) führt über einen Transistor T1 auf den Sprech- und Hörstromkreis, der eine übertragerfreie Gabelschaltung (C1, R1, R2, R3, R4) enthält. Der Sprechstromkreis verläuft über das Mikrofon M und den Widerstand R4, während der Hörstromkreis über die Leitungsnachbildung R1/C1, den Widerstand R2 und einen Koppelkondensator C2 auf die Basis eines Transistors T2 führt, der mit seinem Kollektor über eine Entkoppelungsdiode D1 und einen Widerstand R17 an einer im vorliegenden Fall positiven Speisespannung liegt, die in einer Stromversorgungsschaltung SV aus der Ausgangsspannung der Begrenzerschaltung BS erzeugt wird. Zwischen dem Kollektor des Transistors T2 und dem negativen Ausgang (Schaltungspunkt N) des Gleichrichters GR liegt ein Schallwandler H. Im vorliegenden Fall ist ein piezoelektrischer Schallwandler vorgesehen, der – wie auch das Mikrofon M – im Handapparat angeordnet ist und daher nachfolgend einfach als Hörer bezeichnet wird. Der Kollektor des Transistors T2 ist ferner mit dem Kollektor eines Transistors T4 verbunden, dessen Emitter über einen Widerstand R6 am Schaltungspunkt E angeschlossen ist und dessen Basis mit dem Kollektor eines weiteren Transistors T3 verbunden ist. Der Emitter des Transistors T3 liegt über einen Widerstand R7 am Schaltungspunkt N, die Basis ist mit dem Ausgang B2 einer elektronischen Steuerschaltung ST verbunden. Ein weiterer Ausgang B1 der Steuerschaltung ST ist mit der Basis des Transistors T2 verbunden. Ferner weist die Steuerschaltung ST, an der ein Wähltastensatz WS zur Eingabe der Wahlinformationen angeschlossen ist, einen Ausgang I auf, der mit der Basis eines Transistors T5 verbunden ist, dessen Emitter am Schaltungspunkt N und dessen Kollektor über einen Widerstand R8 mit dem Schaltungspunkt E verbunden ist. Ein weiterer Ausgang M der Steuerschaltung ST führt auf die Basis eines Transistors T6, dessen Emitter am Schaltungspunkt N und dessen Kollektor über einen Widerstand R9 mit der Basis des Transistors T1 verbunden ist, die über einen Widerstand R10 auch mit dem Schaltungspunkt E verbunden ist. Im weiteren weist die Anordnung noch einen Signaldetektor SD auf, der vom Gleichrichter GR her eintreffende, einen bestimmten Schwellwert übersteigende und bestimmten Signalisierungen dienende Gleichstromsignale feststellt und diese Signale in eine für die Steuerschaltung ST auswertbare Form umsetzt und dieser über deren Eingang S zuführt. Vorgesehen ist eine Signalisierung, wie sie in der EP-A-0036 979 ausführlich beschrieben ist. Solche Signale dienen verschiedensten Signalisierungen von einer zentralen Stelle der Fernsprechanlage zu einem Fernsprechapparat. Dem Fernsprechapparat werden dabei im Ruhezustand nicht nur die eigentliche Rufsignalisierung, sondern auch bestimmten Funktionen zugeordnete Perioden des Rufsignals zugeführt und in der Steuerschaltung ST ausgewertet. Die Steuerschaltung ST und der Signaldetektor SD werden von der Stromversorgungsschaltung SV gespeist. Der Schalter GS entspricht dem Gabelkontakt, dessen Schaltzustand der Steuerschaltung ST über deren Eingang GU angezeigt wird.

Die gezeigte Schaltungsanordnung funktioniert wie folgt:

Im Ruhezustand des Fernsprechapparates, d.h. bei aufgelegtem Handapparat, ist der Schalter GS geschlossen. Demzufolge gelangt ein Signal logisch '0' auf den Eingang GU der Steuerschaltung ST und veranlasst diese, über den Ausgang M ein Signal M = '0' an die Basis des Transistors T6 anzulegen, das diesen Transistor sperrt und dadurch auch den Transistor T1 sperrt, wodurch der Hör- und Sprechstromkreis von der Anschlussleitung abgetrennt ist. Die Ausgänge B1, B2 und I der Steuerschaltung ST sind auf '0'. Mit B1 = '0' ist der Transistor T2 gesperrt. Mit B2 = '0' sind auch die Transistoren T3 und T4 gesperrt. I = '0' sperrt den Transistor T5.

Trifft im beschriebenen Ruhezustand ein Signal (Rufsignalisierung oder sonstige bestimmte Signalisierungen) über die Anschlussleitung ein, gelangt dieses auf den Signaldetektor SD. Das Signal wird dort erkannt und in eine Impulsfolge mit für die Steuerschaltung ST geeignetem Pegel umgesetzt. Ueber den Eingang S erhält die Steuerschaltung ST also eine Information über das Anliegen einer Signalisierung an den Andern a, b sowie über deren Rhythmus. Die Steuerschaltung ST kann aufgrund dieses Rhythmus selbsttätig erkennen, ob es sich um eine Rufsignalisierung oder um eine andere – und gegebenenfalls um was für eine – Signalisierung handelt. Im Falle einer Rufsignalisierung setzt die Steuerschaltung ST diese in einen Mehrtonruf um, beispielsweise in einen Drei-Tonruf. Der Drei-Tonruf, dessen Rufphase sich bekanntlich aus drei unmittelbar aufeinanderfolgenden Abschnitten mit jeweils unterschiedlicher Tonfrequenz zusammensetzt, wird über die Ausgänge B1 und B2 wie folgt an den Hörer H angelegt: Im ersten Abschnitt gibt die Steuerschaltung ST während einer bestimmten Zeitspanne an ihrem Ausgang B1 eine Impulsfolge mit der ersten Frequenz ab. Am Ausgang B2 steht die dazu inverse Impulsfolge an. Wenn B2 = '1', wird der Transistor T3 und damit auch der Transistor T4 durchgeschaltet. Demzufolge wird die von der Begrenzerschaltung BS über den Widerstand R6 gelieferte Spannung im Rhythmus des Signals am Ausgang B2 an den Hörer H angelegt und durch diesen abgestrahlt. Der Transistor T2 ist für B2 = '1', d.h. B1 = '0' gesperrt. Wenn hingegen B2 = '0', d.h. B1 = '1', wird der Transistor T2 durchgeschaltet und die Transistoren T4 und T3 werden gesperrt. Damit kann sich der Kondensator, den der piezoelektrische Wandler im wesentlichen darstellt, über den Transistor T2 in Richtung Schaltungspunkt N entladen. In gleicher Weise werden die Tonfrequenzen der zwei weiteren Abschnitte des Drei-Tonrufes erzeugt, indem von der Steuerschaltung ST Impulsfolgen mit der entsprechenden Frequenz abgegeben werden. Der Rufstromkreis der vorliegenden Anordnung verläuft somit im wesentlichen über den Signaldetektor SD, die Steuerschaltung ST und die Transistoren T3 und T4, über dessen Emitter-Kollektor-Kreis dem Hörer H die Rufenergie zugeführt wird. Im Falle einer anderen Signalisierung veranlasst die Steuerschaltung ST die Auslösung der entsprechenden Funktionen im Fernsprechapparat, wie z.B. die Aktivierung optischer und/oder akustischer Anzeigen.

Wird der Handapparat des Fernsprechapparates zur Beantwortung des Anrufes abgehoben, öffnet der Schalter GS, was die Steuerschaltung ST veranlasst, über ihren Ausgang M ein Signal M = '1' an die Basis des Transistors T6 anzulegen, das diesen in den leitenden Zustand versetzt, wodurch auch der Transistor T1 durchgeschaltet wird. Damit ist der Hör- und Sprechstromkreis zugeschaltet. In diesem Zustand ist B1 = '1' und B2 = '0'. Das über die Anschlussleitung ankommende Sprachsignal gelangt über den Hörstromkreis und den Koppelkondensator C2 an die Basis des Transistors T2 und aufgrund von B1 ='1' auf den Hörer H, von wo es abgestrahlt wird. Das abgehende Sprachsignal gelangt über das Mikrophon M im Sprechstromkreis auf die Adern a, b der Anschlussleitung.

Es kommt nicht selten vor, dass ein Fernsprechteilnehmer nach Beendigung eines Gespräches den üblichen mechanischen Gabelkontakt anstatt durch Auflegen des Handapparates einfach durch Niederdrücken mit der Hand betätigt. Dies ist erfahrungsgemäss gerade dann der Fall, wenn er nach Gesprächsende unverzüglich eine neue Verbindung aufbauen will und daher den Handapparat gar nicht erst auflegt, sondern weiterhin gesprächs- und hörbereit in der Hand behält. Bei der vorliegenden Schaltungsanordnung, wo der Hörer H im Handapparat sowohl als Hörorgan als auch als Ruforgan dient, besteht bei einem solchen Verhalten des Fernsprechteilnehmers die Gefahr, dass während der Betätigung des Gabelkontaktes eine Ruf- oder sonstige akustische Signalisierung auf den Fernsprechapparat und damit in beschriebener Weise auf den Hörer H gelangen kann. Wenn das vom Hörer H abgestrahlte Signal zwecks Erzeugung einer genügenden Lautstärke einen Pegel aufweist, der bei direkter Einstrahlung in das menschliche Ohr Gehörschädigungen zur Folge haben kann, sind Vorkehrungen zu treffen, um derartige gefährliche Einwirkungen auf das Ohr des Fernsprechteilnehmers sicher zu verhindern. Der vorliegende Fernsprechapparat kann daher im Handapparat mit einem Magneten und im Bereich der Auflagestelle für den Handapparat im Apparategehäuse mit einem magnetisch beeinflussbaren Schalter GS, z.B. einen Reed-Kontakt versehen werden, dessen Schaltstellung, wie erwähnt, der Steuerschaltung ST über deren Eingang GU mitgeteilt wird. Eine solche Gabelkontaktanordnung ist an sich aus der EP-A-0027 188 bekannt. Damit wird gewährleistet, dass der Gabelkontakt sich nur dann in der dem Ruhezustand des Fernsprechapparates entsprechenden Stellung befindet, wenn der Handapparat tatsächlich aufgelegt ist, so dass eine im Ruhezustand evtl. eintreffende Signalisierung nicht mehr direkt auf das Ohr des Fernsprechteilnehmers einwirken kann.

Nimmt der Fernsprechteilnehmer den Handapparat zwecks Aufbau einer Gesprächsverbindung ab, wird über den Ausgang M = '1' der Steuerschaltung ST der
Transistor T1 durchgeschaltet und gleichzeitg der Ausgang B auf '1' gesetzt. Der
Schleifenstrom fliesst über das Mikrofon M und den Widerstand R4. Nach Empfang des
Wähltones über den Hörer H kann der Teilnehmer mit der Wahl beginnen. Bei Wahlbeginn wechselt der Ausgang M von '1' auf '0' und verbleibt bis zum Wahlende in
diesem Zustand. Das gleiche gilt für den Ausgang B1 der Steuerschaltung ST. Die
Wahlziffern werden über den Wähltasten*satz* WS in die Steuerschaltung ST eingegeben.
Diese setzt sie in entsprechende Impulsfolgen um, welche über den Ausgang I auf die
Basis des Transistors T5 gelangen und diesen im entsprechenden Rhythmus durchschalten. Die Durchschaltung des Transistors T5 hat jeweils eine Veränderung des
Schleifenwiderstandes und damit des Schleifengleichstromes zur Folge, welche in Einrichtungen der Fernsprechanlage, an die der Fernsprechapparat angeschlossen ist,
festgestellt wird. Entsprechend der impulsweisen Durchschaltung des Transistors T5
gelangt die Wahlinformation über die Anschlussleitung zu einer zentralen Wahlaufnahmeeinrichtung, wo sie zwecks Herstellung der gewünschten Verbindung ausgewertet und aufgrund dessen die Verbindung in bekannter Weise hergestellt wird.

Als Steuerschaltung ST eignet sich ein Mikrocomputer, der durch entsprechende
Programmierung die beschriebenen Steuerfunktionen für den Hörer H, ferner die
Umsetzung der eingetasteten Wahlziffern, die Auswertung der über den Eingang S
eintreffenden Signalisierungen und die Erzeugung des Mehrtonrufes in vorteilhafter
Weise übernehmen kann.

PATENTANSPRUECHE

1. Schaltungsanordnung für einen über die Anschlussleitung gespeisten Fernsprechapparat für Fernmelde-, insbesondere Fernsprechvermittlungsanlagen, mit einem an die Anschlussleitung anschaltbaren, eine übertragerfreie Gabelschaltung enthaltenden Hör- und Sprechstromkreis, einem Rufstromkreis sowie mit einem Wähltastensatz, dessen eingetastete Ziffern in einer elektronischen Schaltung in zugeordnete Wählzeichen umsetzbar sind, d a d u r c h   g e k e n n z e i c h n e t , dass eine Steuerschaltung (ST) vorgesehen ist, die neben der Umsetzung der eingetasteten Ziffern auch einen Schallwandler (H) steuert, der sowohl als Hörorgan für die Sprachsignale und die Hörtöne als auch für die Abstrahlung eines Tonrufsignales dient, das in der Steuerschaltung (ST) aus dem auf der Anschlussleitung eintreffenden Rufsignal erzeugt wird, und der auf Veranlassung der Steuerschaltung (ST) entsprechend dem Betriebszustand des Fernsprechapparates entweder in den Hörstromkreis oder in den Rufstromkreis einschaltbar ist.

2. Schaltungsanordnung nach Anspruch 1 d a d u r c h   g e k e n n z e i c h n e t , dass als Schallwandler (H) ein piezoelektrischer Wandler vorgesehen ist.

3. Schaltungsanordnung nach Anspruch 2, d a d u r c h   g e k e n n z e i c h n e t , dass der Schallwandler (H) zur Abstrahlung eines Tonrufsignals alternierend über einen Ausgang (B2) der Steuerschaltung (ST) an ein aus dem Gleichspannungspotential auf der Anschlussleitung erzeugtes Potential und über einen weiteren Ausgang (B1) der Steuerschaltung (ST) an einen Entladestromkreis anschaltbar ist, und dass zur Abstrahlung der Sprachsignale der Schallwandler (H) während des Gesprächszustandes über den Ausgang (B1) mit dem Hörstromkreis verbindbar ist.

4. Schaltungsanordnung nach Anspruch 3, d a d u r c h   g e k e n n z e i c h n e t , dass als Gabelkontakt (GS) ein nicht mechanisch betätigbarer Kontakt vorgesehen ist.

5. Schaltungsanordnung nach einem der vorangehenden Ansprüche, d a d u r c h
g e k e n n z e i c h n e t , dass ein Signaldetektor (SD) vorhanden ist, der neben dem
Rufsignal auch andere über die Anschlussleitung eintreffende Signalisierungen feststellt
und der Steuerschaltung (ST) zuführt, die die Signalisierungen auswertet und die entsprechenden Funktionen im Fernsprechapparat auslöst.

6. Schaltungsanordnung nach Anspruch 5, d a d u r c h  g e k e n n z e i c h n e t ,
dass als Steuerschaltung (ST) ein Mikrocomputer vorgesehen ist.

M

C1
R1
R2
R3
R4
C2

BS
E
T1
R10
R9
T6
R11
R6
R8
T5
R12

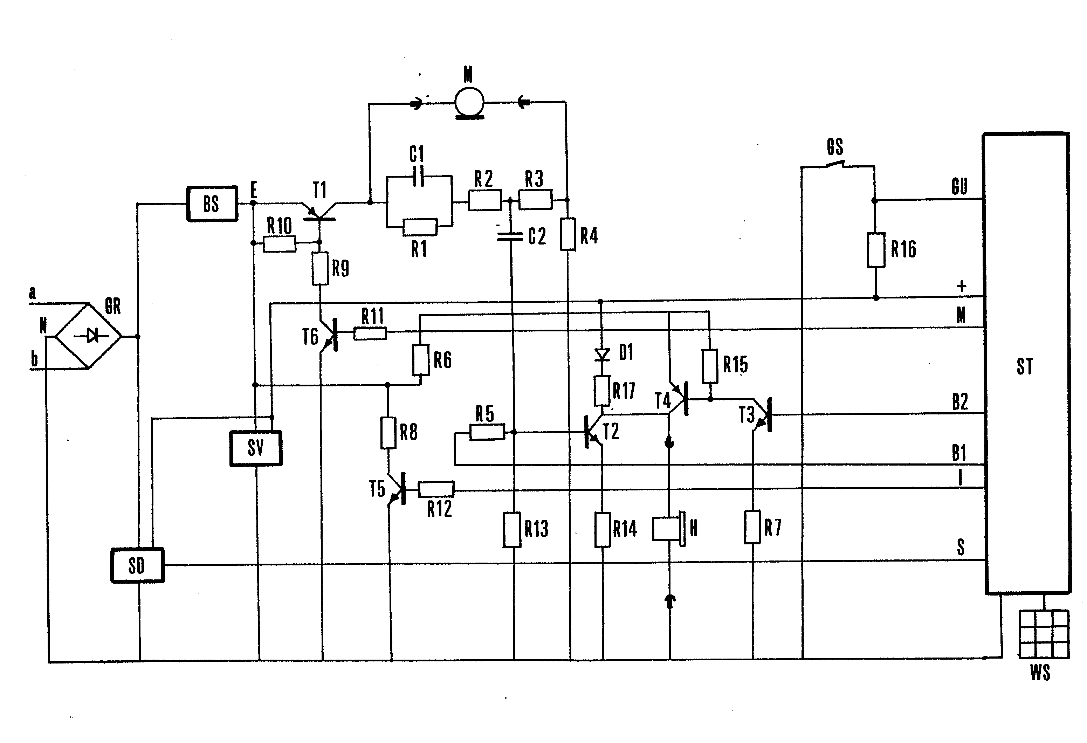

a
N
b
GR

SV

SD

R5
T2
R13

D1
R17
R14
H

GS
R16

GU
+
M

B2
B1
I
S

ST

R15
T4
R3
T3
R7

WS

83 137901

1/1